# FASCICULE DE BREVET EUROPEEN

(11) **EP 3 136 073 B1**
(45) Date de publication et mention de la délivrance du brevet: **04.07.2018**
(21) Numéro de dépôt: 16181795.2
(22) Date de dépôt: 28.07.2016
(51) Int. Cl.: G01L 7/10, G01L 7/14, G01C 5/06, G01L 27/00, G04B 47/06

(54) **DISPOSITIF DE MESURE DE L'ALTITUDE ET OBJET PORTABLE COMPRENANT UN TEL DISPOSITIF**
HÖHENMESSVORRICHTUNG UND TRAGBARES OBJEKT, DAS EINE SOLCHE VORRICHTUNG UMFASST
DEVICE FOR MEASURING ALTITUDE AND PORTABLE OBJECT INCLUDING SUCH A DEVICE

(30) Priorité: 25.08.2015 EP 15182364
(43) Date de publication de la demande: 01.03.2017
(73) Titulaire: The Swatch Group Research and Development Ltd., 2074 Marin (CH)
(72) Inventeur: Ferri, Yvan, 1004 Lausanne (CH); Rebeaud, Nicolas, 1189 Saubraz (CH)
(74) Mandataire: Supper, Marc

(56) Documents cités:
- EP-A1- 0 011 681
- WO-A2-2015/090944
- DE-U1- 8 015 715
- FR-A1- 2 343 998
- US-A- 3 040 582
- US-A- 3 874 242
- US-A- 5 773 732

## Description

### Domaine de l'invention

La présente invention concerne un dispositif de mesure de l'altitude. Plus précisément, la présente invention concerne un dispositif de mesure de l'altitude comprenant un capteur de pression anéroïde. La présente invention concerne également un objet portable, par exemple une montre-bracelet, comprenant un dispositif de mesure de l'altitude selon l'invention.

### Arrière-plan technologique de l'invention

De nombreux dispositifs de mesure de l'altitude sont connus, parmi lesquels les altimètres de parachutisme dont l'élément sensible est un capteur de pression de type anéroïde. De tels altimètres comprennent typiquement un cadran dont le tour est gradué entre 0 et 4000 mètres d'altitude. Une analyse faite par la Demanderesse de plusieurs altimètres achetés dans le commerce fait ressortir une hystérèse. Ce défaut de linéarité a été mis en évidence par le calcul du travail des forces de frottement dans le mécanisme de ces altimètres. Le réglage du mécanisme a donc été effectué à la descente car l'erreur absolue de mesure de l'altitude est plus faible lorsque l'altitude diminue. Le réglage de ces altimètres a été effectué entre 0 et 3000 mètres d'altitude car il a été observé que l'erreur de mesure augmentait au-delà de 3000 mètres d'altitude. C'est ainsi que l'erreur maximale entre 0 et 3000 mètres d'altitude a atteint 21 mètres pour l'un des altimètres, et 34 mètres pour un autre altimètre. On voit donc que les altimètres de parachutisme qui ont été analysés présentent un défaut de linéarité qui conduit à une certaine imprécision de la mesure de l'ordre de 1%. En outre, étant donné la dispersion des caractéristiques des capsules anéroïdes et les tolérances de fabrication avec lesquelles sont conçus de tels altimètres, une opération préalable d'étalonnage est requise. Dans le cas des altimètres du type mentionné ci-dessus, cette opération d'étalonnage est assez fastidieuse. Elle est effectuée manuellement par une personne spécialement formée à cette tâche et consiste à lire la valeur affichée par l'altimètre successivement sous une pression équivalente à celle qui règne au niveau de la mer, puis par exemple sous une pression équivalente à 4000 mètres d'altitude, puis à nouveau sous une pression équivalente à 0 mètre et ainsi de suite. A chaque fois, le mécanisme est réglé pour que l'altitude affichée corresponde à la valeur de la pression ambiante. En procédant ainsi par itérations successives, on réduit progressivement l'erreur de mesure de l'altimètre.

Dans le document US 5,773,732 A qui divulgue un instrument de mesure, des ponts sont connectés l'un à l'autre et à une base de l'instrument dans une position définie par des moyens de verrouillage réciproques et par les forces élastiques de languettes de maintien. Dans l'état assemblé prêt à l'emploi, les ponts sont par ailleurs reliés entre eux par une unique vis. Cette vis agit sur une languette qui est découpée libre dans le pont inférieur et qui est par conséquent élastiquement déformable. Une goupille support dont la pointe fait saillie dans une cavité d'un axe monté tournant est vissée dans un rebord de la languette plié vers le bas. Lorsqu'on visse ou que l'on dévisse la vis, cela provoque la déformation élastique de la languette et donc le déplacement concomitant de la goupille support et de l'axe. Par contre, l'actionnement de la vis n'a nullement pour effet de déplacer la membrane.

Dans le document DE 80 15 715 U1 qui concerne un appareil de mesure de la pression absolue, une roue dentée qui sert de siège à un capteur de pression peut être déplacée dans un sens ou dans son sens contraire selon la direction rectiligne de déformation du capteur de pression, en vissant ou en dévissant une vis fixée dans le fond d'un bâti. Le fond sur lequel est vissé le couvercle est donc fixe lorsque le capteur de pression est déplacé selon sa direction rectiligne de déformation.

Dans le document US 3,8744,242 A qui concerne un instrument sensible à la pression, la position d'un capteur de pression peut être ajustée au moyen d'une tige filetée vissée dans un trou fileté ménagé de manière centrale dans une plaque de base. Cette plaque de base est donc immobile et ne participe pas au réglage de la position du capteur de pression.

Le document US 3,040,582 A concerne un mécanisme de transmission de mouvement dont l'étalonnage est effectué au moyen d'une vis qui permet d'ajuster la position d'une capsule à membrane étanche. Dans ce document, aucun des éléments du boîtier qui renferme le mécanisme de transmission de mouvement ne participe au réglage de la position de la capsule.

Dans le document EP 0 011 681 A1, une tige filetée, fixée à la membrane inférieure d'une capsule à membrane, est vissée dans un trou fileté ménagé dans une plaque de base et permet d'ajuster la distance entre la capsule à membrane et la plaque de base. La plaque de base ne participe pas au réglage de la position de la capsule à membrane.

Dans le document WO 2015/090844 A2 qui concerne une pièce d'horlogerie comprenant un capteur de pression atmosphérique, il n'est pas prévu que le capteur de pression puisse être déplacé suivant sa direction rectiligne de déformation pour les besoins de son étalonnage, car on suppose que le capteur de pression a été convenablement réglé pour détecter les variations de pression atmosphérique.

Dans le document FR 2 343 998 A1 qui concerne un appareil de mesure de profondeur, il est seulement prévu de pouvoir amener une aiguille du profondimètre en position zéro pour tenir compte de la différence d'altitude entre le niveau de la mer et la surface des eaux d'un lac dans lequel on veut plonger.

### Résumé de l'invention

La présente invention a pour but de remédier aux problèmes mentionnés ci-dessus ainsi qu'à d'autres encore en procurant un dispositif de mesure de l'altitude qui soit précis et dont l'hystérèse soit aussi réduite que possible.

A cet effet, la présente invention concerne un dispositif de mesure de l'altitude selon la revendication 1. Grâce à ces caractéristiques, la présente invention procure un dispositif de mesure de l'altitude doté d'une très grande précision de mesure. Ce résultat remarquable est atteint grâce au fait que la précision de mesure du dispositif de mesure de l'altitude selon l'invention n'est pas affectée par les éventuelles variations dimensionnelles du capteur de pression atmosphérique. En effet, les tolérances de fabrication du capteur de pression atmosphérique sont intégralement compensées par le fait qu'il est possible d'ajuster avec précision la position du capteur de pression atmosphérique relativement aux autres composants du dispositif de mesure de l'altitude.

Grâce à ces caractéristiques, la présente invention procure un dispositif de mesure de l'altitude dont les opérations d'étalonnage sont considérablement simplifiées et peuvent être automatisées si souhaité. Ce résultat remarquable est atteint grâce au fait que deux opérations de réglage effectuées pour l'une à une pression atmosphérique équivalent au niveau de la mer, et pour l'autre par exemple à une pression correspondant à 4000 mètres d'altitude, suffisent pour étalonner le dispositif de mesure de l'altitude selon l'invention. En outre, les opérations de réglage consistent simplement, pour les deux altitudes sélectionnées, à amener la ligne des points de contact entre la goupille de transmission et le râteau parallèle à l'axe de transmission, puis à ajuster la position du capteur de pression atmosphérique relativement aux autres composants du dispositif de mesure de l'altitude, ce qui peut être contrôlé visuellement très facilement même par un opérateur peu expérimenté, voire par une caméra. La précision avec laquelle il est possible d'effectuer l'étalonnage permet d'obtenir un dispositif de mesure de l'altitude présentant une hystérèse faible, voire nulle, ce qui permet à l'aiguille indicatrice de se déplacer de manière linéaire et donc d'effectuer, le cas échéant, plus d'un tour de cadran et ainsi de pouvoir mesurer avec précision des altitudes plus élevées.

Selon une caractéristique complémentaire de l'invention, le support est doté sur sa périphérie extérieure d'un premier filetage qui coopère avec un second filetage prévu sur la périphérie intérieure du couvercle.

Selon une autre caractéristique de l'invention, le capteur de pression atmosphérique est un capteur anéroïde.

Selon encore une autre caractéristique de l'invention, le système d'actionnement comprend un palpeur qui est en appui sur le capteur de pression atmosphérique et qui est fixé rigidement sur un arbre de transmission agencé pour pivoter sous l'effet des mouvements de déformation du capteur de pression atmosphérique.

Selon encore une autre caractéristique de l'invention, l'arbre de transmission qui porte le palpeur s'étend selon une direction perpendiculaire à la direction rectiligne de déformation du capteur de pression atmosphérique.

Selon encore une autre caractéristique de l'invention, une goupille de transmission fixée rigidement sur l'arbre de transmission communique au système d'actionnement les mouvements de déformation du capteur de pression atmosphérique.

Selon encore une autre caractéristique de l'invention, le système d'actionnement comprend un râteau pourvu d'un secteur denté en arc de cercle qui engrène avec un pignon solidaire d'un axe sur lequel est montée l'aiguille indicatrice.

Selon encore une autre caractéristique de l'invention, le dispositif de mesure de l'altitude comprend des moyens élastiques agencés pour maintenir le palpeur en appui sur le capteur de pression atmosphérique.

Selon une première variante, les moyens élastiques comprennent un ressort hélicoïdal qui exerce une force élastique de rappel sur le râteau.

Selon une seconde variante, les moyens élastiques comprennent un ressort en spires dont une courbe à l'intérieur est fixée sur l'axe sur lequel est montée l'aiguille indicatrice. Préférentiellement, un roulement à billes est disposé entre le ressort en spires et l'axe sur lequel est montée l'aiguille indicatrice.

L'invention concerne également un objet portable tel qu'une montre-bracelet à l'intérieur duquel est logé le dispositif de mesure de l'altitude selon l'invention.

### Brève description des figures

D'autres caractéristiques et avantages de la présente invention ressortiront plus clairement de la description détaillée qui suit d'un mode de réalisation d'un dispositif de mesure de l'altitude selon l'invention, cet exemple étant donné à titre purement illustratif et non limitatif seulement, en liaison avec le dessin annexé sur lequel :
- la figure 1 est une vue en perspective d'une boîte de montre-bracelet à l'intérieur de laquelle est logé un dispositif de mesure de l'altitude selon l'invention ;
- la figure 2 est une vue en perspective du dispositif de mesure de l'altitude selon l'invention ;
- la figure 3 est une vue en perspective et en éclaté d'un boîtier formé d'un couvercle et d'un support et à l'intérieur duquel est logé le dispositif de mesure de l'altitude selon l'invention ;
- la figure 4 est une vue en coupe selon l'axe midi-six heures de la boîte de montre-bracelet à l'intérieur de laquelle est logé le dispositif de mesure de l'altitude ;
- la figure 5 est une vue en perspective du dispositif de mesure de l'altitude selon l'invention contraint par un ressort hélicoïdal afin de maintenir le palpeur en contact permanent avec le capteur de pression atmosphérique ;
- la figure 6 est une vue en perspective du dispositif de mesure de l'altitude selon l'invention contraint par un ressort spiral afin de maintenir le palpeur en contact permanent avec le capteur de pression atmosphérique ;
- la figure 7 est une vue en perspective et en éclaté du boîtier de la figure 3 à l'intérieur duquel est logé le capteur de pression atmosphérique ;
- la figure 8 est une vue en perspective et en éclaté de la cuve pour l'étalonnage du dispositif de mesure de l'altitude selon l'invention ;
- la figure 9 est une vue en perspective de la cuve à l'intérieur de laquelle est placé le dispositif de mesure de l'altitude selon l'invention pour son étalonnage ;
- la figure 10 est une vue en perspective et en éclaté du système d'entraînement permettant d'ajuster la hauteur du capteur de pression atmosphérique, et
- la figure 11 est une vue partielle en perspective du système d'immobilisation du dispositif de mesure de l'altitude selon l'invention à l'intérieur de la cuve étanche.

### Description détaillée d'un mode de réalisation de l'invention

La présente invention procède de l'idée générale inventive qui consiste à procurer un dispositif de mesure de l'altitude qui soit aussi précis que possible et d'une grande linéarité. A cet effet, la présente invention procure un dispositif de mesure de l'altitude dans lequel les tolérances de fabrication des divers composants, en particulier celles du capteur de pression atmosphérique, peuvent être compensées, ce qui garantit une grande linéarité de la mesure de l'altitude. Toujours dans le but d'assurer la linéarité et la précision de la mesure, on a également cherché à minimiser autant que possible les forces de frottement qui apparaissent lors du fonctionnement du dispositif de mesure de l'altitude selon l'invention. Enfin, l'étalonnage du dispositif de mesure de l'altitude selon l'invention ne requiert que deux mesures effectuées pour l'une à une pression atmosphérique correspondant au niveau de la mer, et pour l'autre à une pression atmosphérique moindre correspondant à une altitude choisie, ce qui permet de simplifier considérablement ces opérations d'étalonnage, voire de les automatiser le cas échéant.

Désigné dans son ensemble par la référence numérique générale 1, le dispositif de mesure de l'altitude selon l'invention comprend un capteur de pression atmosphérique 2 agencé pour se déformer géométriquement selon une direction rectiligne sous l'effet d'une fluctuation de la pression atmosphérique à mesurer.

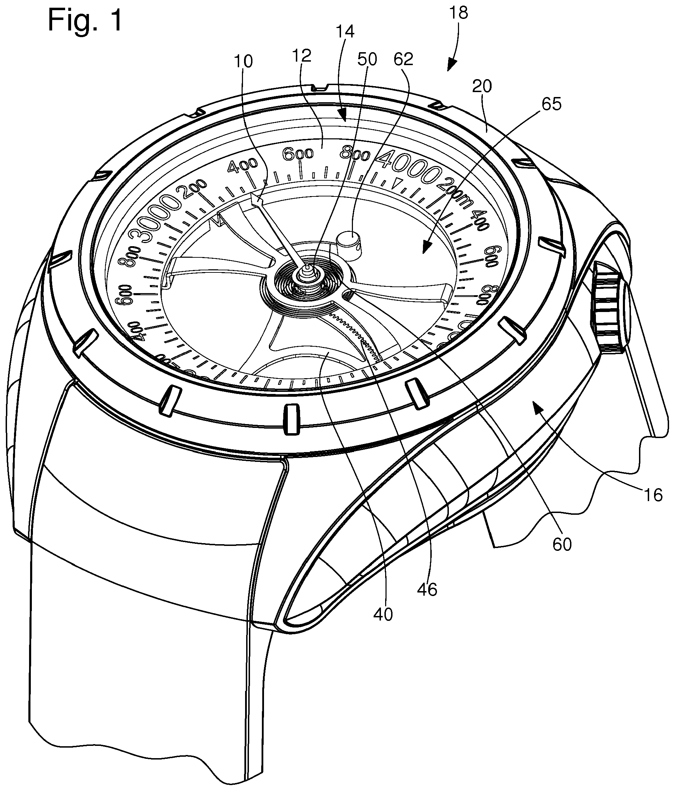

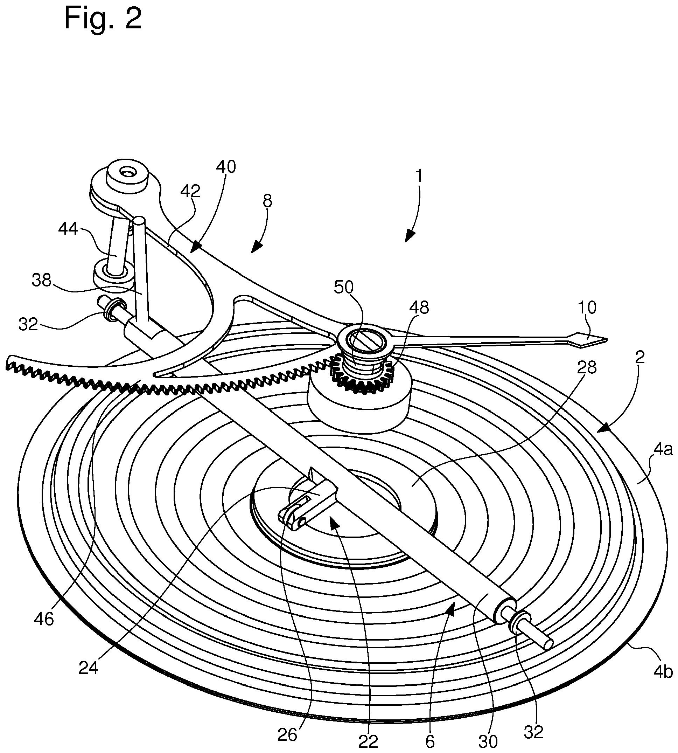

Comme il ressort notamment de la figure 2, le capteur de pression atmosphérique 2 est préférentiellement un capteur de pression du type anéroïde. Il s'agit d'une boîte ronde, plate, généralement métallique, formée de deux tôles minces ondulées supérieure 4a et inférieure 4b assemblées entre elles par soudage. Cette boîte est étanche puisqu'elle a été scellée sous vide partiel. Le capteur de pression atmosphérique 2 se comprime ou se détend en fonction des variations de la pression atmosphérique, ce qui provoque le rapprochement ou l'éloignement des deux tôles supérieure 4a et inférieure 4b l'une de l'autre. Les mouvements de déformation du capteur de pression atmosphérique 2 sont transformés, via un système de transmission 6, en un mouvement de pivotement dans un plan perpendiculaire à la direction rectiligne de déformation du capteur de pression atmosphérique 2 d'un système d'actionnement 8 qui entraîne une aiguille indicatrice 10 en pivotement. Comme visible sur la figure 1, cette aiguille indicatrice 10 se déplace en regard d'une échelle circulaire 12 ménagée sur un rehaut 14 et graduée par exemple entre 0 et 4000 mètres par pas de 50 mètres. Ce rehaut 14 est logé dans une boîte 16 d'une montre-bracelet 18 et peut être entraîné en pivotement par l'utilisateur au moyen d'une lunette rotative 20. On notera que dans l'exemple représenté au dessin, le capteur de pression atmosphérique 2 se déforme selon une direction rectiligne verticale.

Le système de transmission 6 comprend un palpeur 22 formé d'un bras 24 qui, de manière préférée mais non exclusive, est muni à son extrémité libre d'une roulette 26 par laquelle le palpeur 22 est en contact avec la tôle supérieure 4a du capteur de pression atmosphérique 2. Avantageusement, une rondelle 28 sur laquelle la roulette 26 est en appui est fixée sur la tôle supérieure 4a du capteur de pression atmosphérique 2. Cette rondelle 28, de même que la roulette 26, ont pour but de minimiser autant que possible les forces de frottement entre le palpeur 22 et le capteur de pression atmosphérique 2 et donc d'améliorer la précision du dispositif de mesure de l'altitude 1.

Le palpeur 22 est fixé rigidement sur un axe de transmission 30 qui s'étend selon une direction perpendiculaire à la direction rectiligne de déformation du capteur de pression atmosphérique 2. Dans l'exemple représenté au dessin, l'axe de transmission 30 s'étend donc horizontalement.

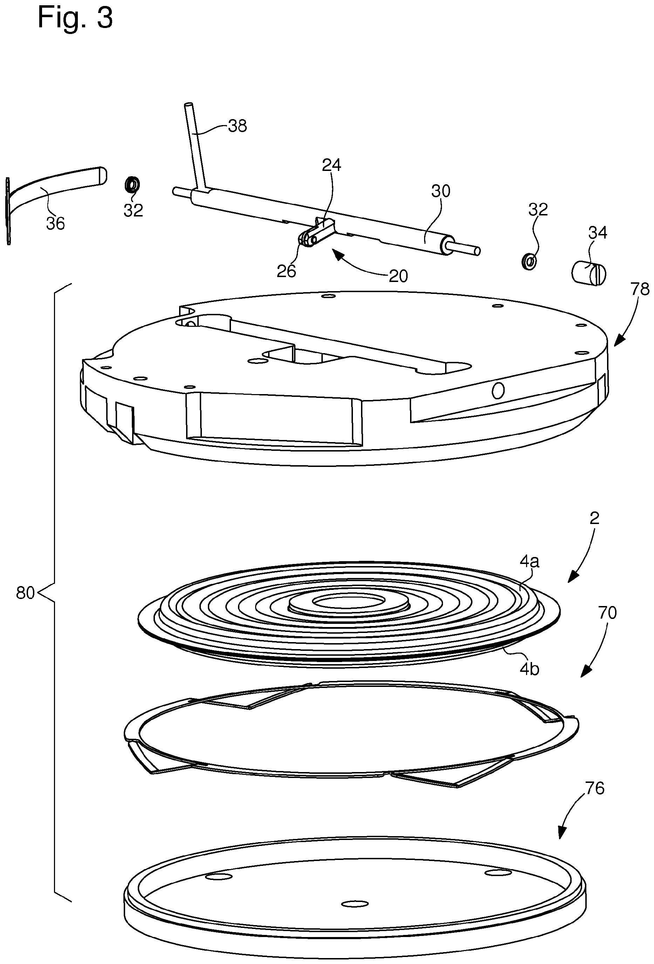

L'axe de transmission 30 dont les extrémités sont munies de pierres 32 est agencé pour pivoter sous l'effet des mouvements de déformation du capteur de pression atmosphérique 2 qui lui sont transmis par le palpeur 22. Notons également que l'axe de transmission 30 est monté mobile axialement sans jeu entre une vis de réglage 34 et une lame élastique 36 (figure 3). Par action sur la vis de réglage 34, il est ainsi possible de régler la position longitudinale de l'axe de transmission 30.

Selon encore une autre caractéristique de l'invention, une goupille de transmission 38 fixée rigidement sur l'axe de transmission 30 communique au système d'actionnement 8 les mouvements de déformation du capteur de pression atmosphérique 2.

Plus précisément, le système d'actionnement 8 comprend un râteau 40 contre lequel la goupille de transmission 38 est en appui selon un segment rectiligne 42 de points de contact. Comme on le verra ci-après, ce segment rectiligne 42 sert de repère lors de l'étalonnage du dispositif de mesure de l'altitude 1. En effet, le dispositif de mesure de l'altitude 1 est convenablement réglé pour l'altitude au niveau de la mer lorsque le segment rectiligne 42 de points de contact s'étend parallèlement à l'axe de transmission 30. Pour cela, on ajuste la position axiale de l'axe de transmission 30.

Le râteau 40 est monté pivotant dans un plan horizontal autour d'un axe de pivotement vertical 44. Le râteau 40 est pourvu d'un secteur denté 46 en arc de cercle qui engrène avec un pignon 48 solidaire d'un tube 50 sur lequel est montée l'aiguille indicatrice 10. Le tube 50 peut être pivoté sur le canon des heures du mouvement d'horlogerie. Mais, dans ce cas, on peut observer des forces de frottement qui peuvent fausser la mesure. C'est pourquoi on préfère faire passer la chaussée à l'intérieur du tube 50 sans qu'il y ait contact entre la chaussée et le tube 50.

Selon encore une autre caractéristique de l'invention, le dispositif de mesure de l'altitude 1 comprend des moyens élastiques agencés pour maintenir le palpeur 22 en contact permanent avec le capteur de pression atmosphérique 2.

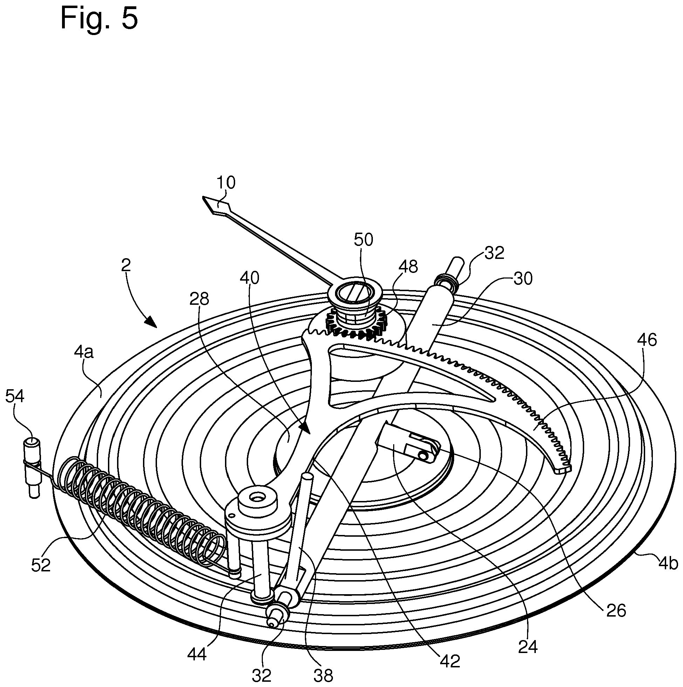

Selon une première variante (figure 5), les moyens élastiques comprennent un ressort hélicoïdal 52 fixé à une extrémité sur un piton 54 et à une autre extrémité sur le râteau 40 sur lequel il exerce une force élastique de rappel. Cette force de rappel élastique est transmise au palpeur 22 via la goupille de transmission 38 et l'axe de transmission 30.

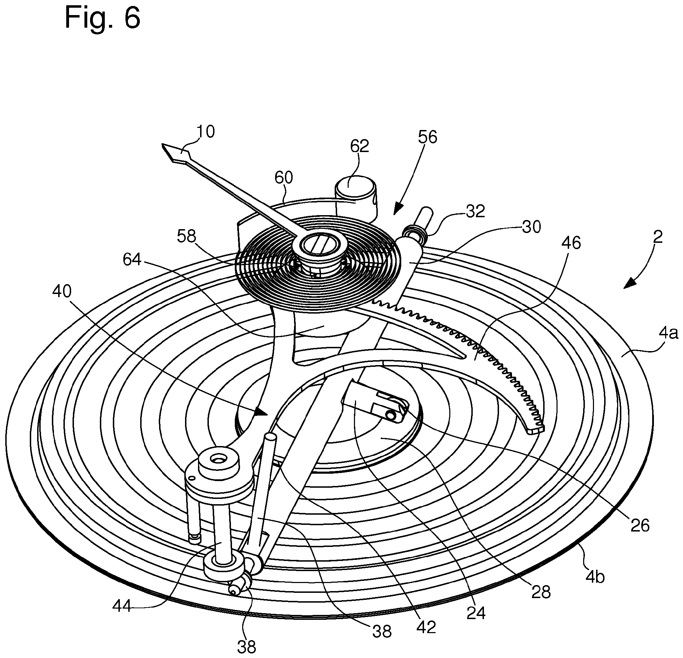

Selon une seconde variante (figure 6), les moyens élastiques comprennent un ressort en spires 56 dont une courbe à l'intérieur 58 est fixée sur le tube 50 sur lequel est montée l'aiguille indicatrice 10 et dont une courbe à l'extérieur 60 est fixée sur un piton 62 solidaire de la boîte 16 de la montre-bracelet 18. Préférentiellement mais non obligatoirement, le tube 50 sur lequel est montée l'aiguille indicatrice 10 est fixé sur l'intérieur d'un roulement à billes 64 lui-même fixé sur un cadran 65 de la montre-bracelet 18.

Ces moyens élastiques, à savoir ressort hélicoïdal 52 ou ressort en spires 56, permettent de maintenir le palpeur 22 en contact avec le capteur de pression atmosphérique 2 et de compenser les éventuels jeux entre la denture du secteur denté 46 du râteau 40 et la denture du pignon 48.

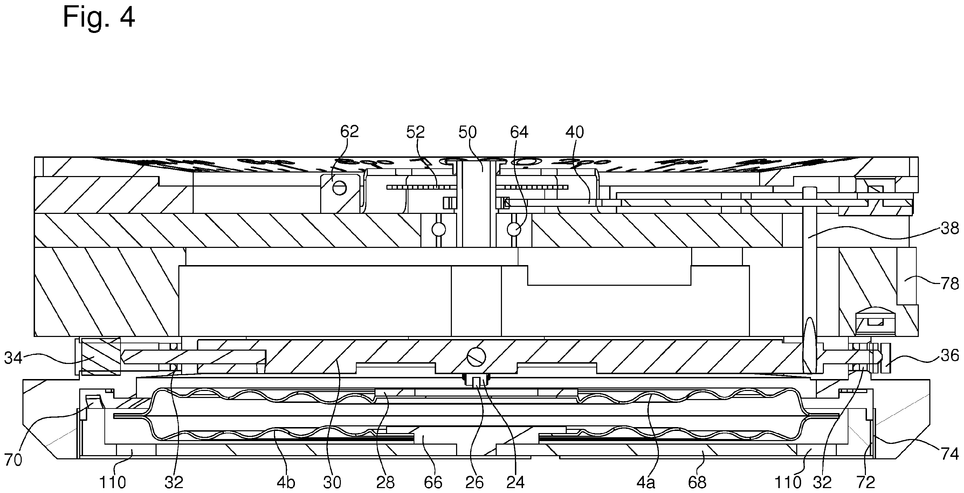

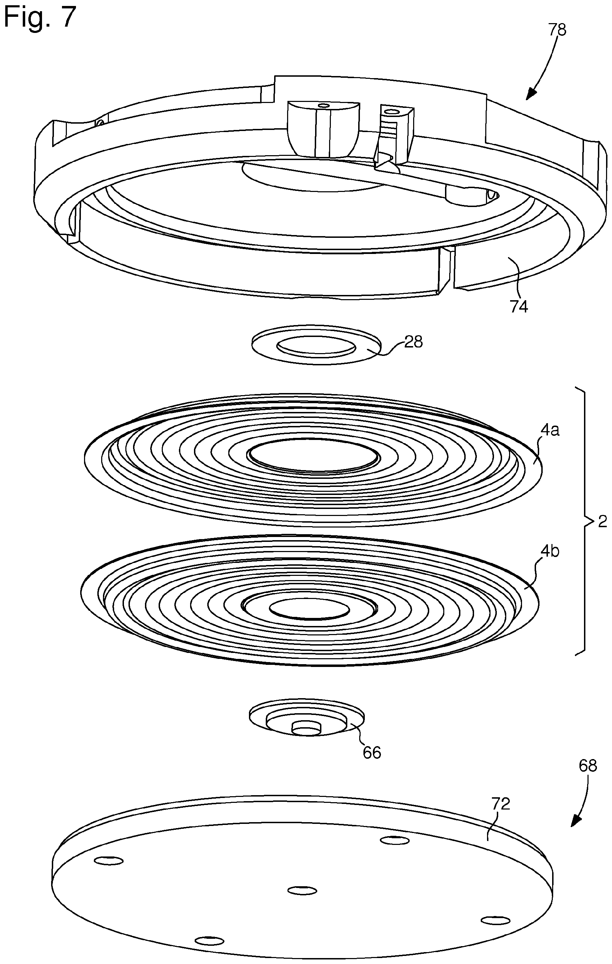

Selon encore une autre caractéristique de l'invention (figure 7), le capteur de pression atmosphérique 2 est monté sur un siège 66 qui est par exemple chassé et collé dans un support 68 avec interposition d'une bride 70 de rattrapage de jeu entre le capteur de pression atmosphérique 2 et le support 68 (figures 3 et 4). Ce support 68 est doté sur sa périphérie extérieure d'un premier filetage 72 qui coopère avec un second filetage 74 prévu sur la périphérie intérieure d'un couvercle 78 qui, avec le support 68, forme un boîtier 80. Le support 68 peut donc être vissé ou dévissé, ce qui permet de régler précisément la hauteur du capteur de pression atmosphérique 2 par rapport aux autres composants du dispositif de mesure de l'altitude 1 et ainsi compenser les éventuelles variations dimensionnelles du capteur de pression atmosphérique 2 dues aux tolérances de fabrication.

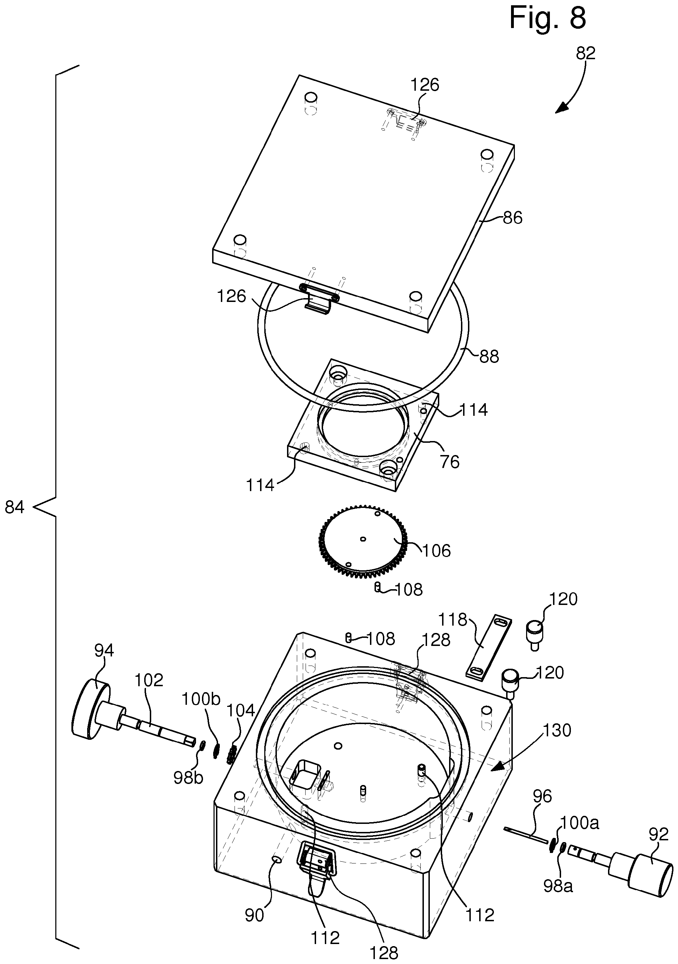

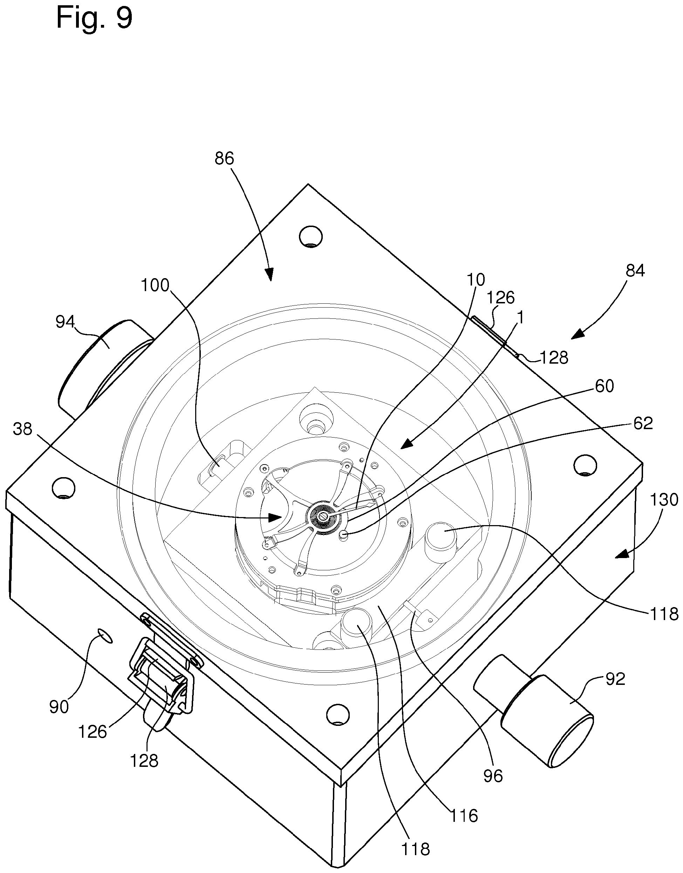

Pour son étalonnage (figures 8 et 9), le dispositif de mesure de l'altitude 1 est placé à l'intérieur d'un dispositif étanche 82 par exemple du genre d'une cuve étanche 84 fermée par une glace 86 avec interposition d'un joint d'étanchéité 88. Cette cuve étanche 84 comporte une prise d'air 90 qui permet d'ajuster la pression à l'intérieur de cette cuve 84 selon les besoins.

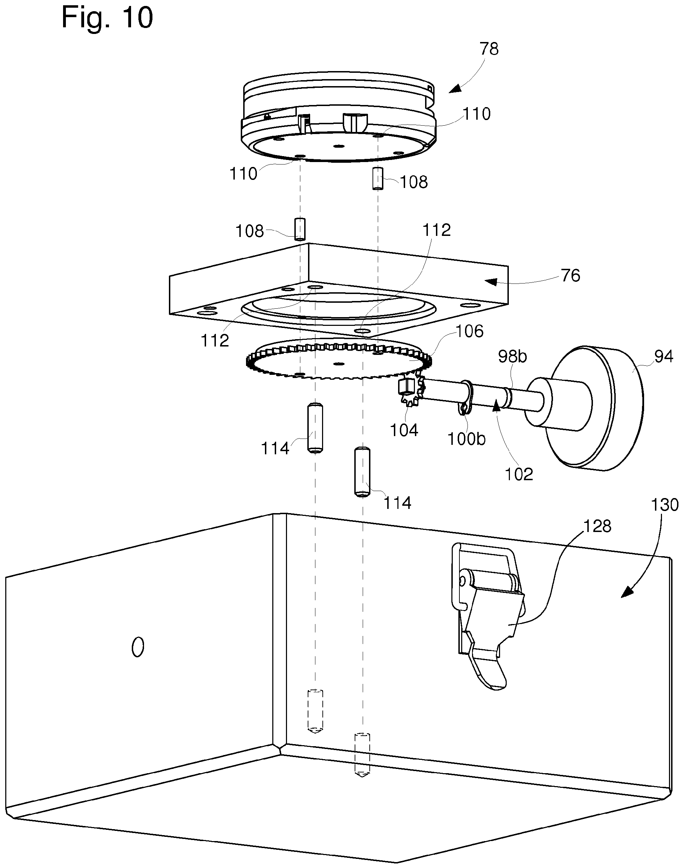

La cuve étanche 84 comprend également un premier et un second boutons 92 et 94 pour le réglage du dispositif de mesure de l'altitude 1. Ces boutons 92 et 94 peuvent être moletés pour une meilleure préhension. Le premier bouton 92 est prolongé vers l'intérieur de la cuve étanche 84 par une lame de tournevis 96 pivotée sur une pierre 98a grâce à laquelle on peut actionner la vis de réglage 34 permettant de régler la position axiale de l'axe de transmission 30. Un joint d'étanchéité 100a est disposé sur la lame de tournevis 96 pour garantir l'étanchéité du passage du premier bouton 92. Le second bouton 94 comprend une tige 102 pivotée sur une pierre 98b et sur laquelle est engagé un joint d'étanchéité 100b pour garantir l'étanchéité du passage du second bouton 94. A son extrémité libre, la tige 102 porte un pignon 104 qui coopère avec une roue dentée 106 qui s'étend horizontalement (figure 10). Cette roue dentée 106 porte dans sa planche deux goupilles 108 disposées de manière diamétralement opposée qui viennent se loger dans deux trous correspondants 110 ménagés dans le support 68. En tournant le second bouton 94 dans un sens ou l'autre, il est ainsi possible de visser ou de dévisser le support 68 et donc de faire monter ou descendre le capteur de pression atmosphérique 2.

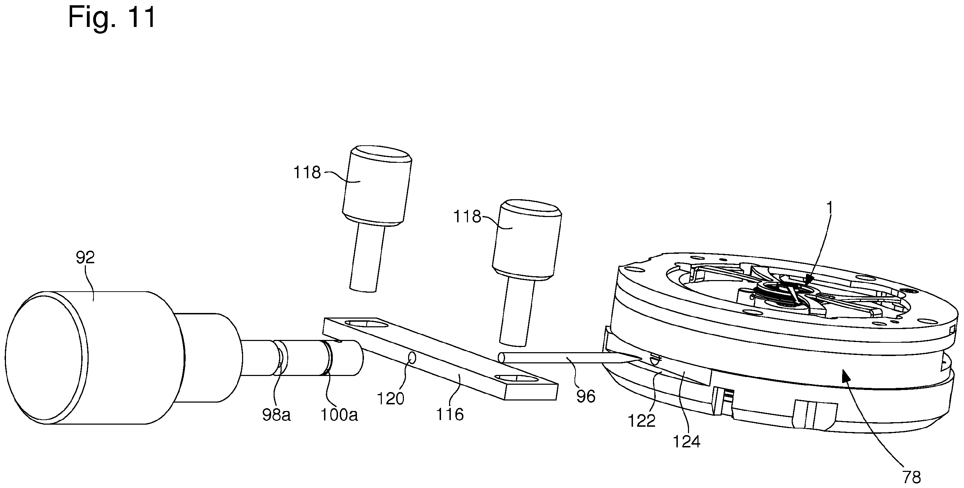

Plus précisément, et comme illustré à la figure 10, le dispositif de mesure de l'altitude 1 est reçu dans la cuve étanche 84 par un posage 76 muni de deux trous 112 dans lesquels s'engagent deux goupilles 114 qui font saillie dans le fond de la cuve 84. Il est également prévu une lame de maintien 116 retenue par deux vis 118 (figure 11). Cette lame de maintien 116 est percée d'un trou 120 à travers lequel passe la lame de tournevis 96 et vient en appui sur une portée plane 122 ménagée dans le couvercle 78 et délimitée par une paroi plane rectiligne 124 contre laquelle la lame de maintien 116 vient en appui. De la sorte, le couvercle 78 est bloqué axialement et en pivotement à l'intérieur de la cuve 84, ce qui permet, selon le besoin, de visser ou de dévisser le support 68 et donc de faire monter ou descendre le capteur de pression atmosphérique 2 par rapport aux autres composants du dispositif de mesure de l'altitude 1 lors des opérations d'étalonnage de ce dernier. Pour la fermeture étanche de la cuve 84, la glace 86 est munie de deux crochets 126 qui coopèrent avec deux verrous 128 fixés sur le bâti 130 de la cuve 84.

L'étalonnage du dispositif de mesure de l'altitude 1 selon l'invention s'effectue de la manière suivante.

Tout d'abord, on introduit le dispositif de mesure de l'altitude 1 selon l'invention dans la cuve 84. Le dispositif de mesure de l'altitude 1 est immobilisé à l'intérieur de la cuve 84 grâce à la lame de maintien 116 que l'on bloque en serrant les vis 118. Au préalable, on s'assure que les goupilles 108 soient bien introduites dans les trous correspondants 110 ménagés dans le support 68. Pour ce faire, il suffit de faire tourner la roue dentée 106 jusqu'à ce que les goupilles 108 pénètrent dans les trous 110. On referme la cuve 84 de manière étanche au moyen des verrous 128 qui viennent en prise avec les crochets 126. On s'assure que le joint d'étanchéité 88 est bien en place.

Ensuite, on amène la pression atmosphérique à l'intérieur de la cuve 72 à une valeur de 1013,25 hPa qui correspond à la pression atmosphérique moyenne qui règne au niveau de la mer à 0 mètre d'altitude et l'on observe la position du segment rectiligne de points de contact 42 par rapport à l'axe de transmission 30. Si nécessaire, on tourne le second bouton 94 dans un sens ou l'autre, de façon à visser ou dévisser le support 68 et donc faire monter ou descendre le capteur de pression atmosphérique 2. Le mouvement de translation du capteur de pression atmosphérique 2 est communiqué au râteau 40 via le palpeur 22 et la goupille de transmission 38. Le dispositif de mesure de l'altitude 1 est convenablement réglé pour l'altitude au niveau de la mer lorsque le segment rectiligne de points de contact 42 s'étend parallèlement à l'axe de transmission 30.

Enfin, on réduit la pression atmosphérique à l'intérieur de la cuve 84 à une valeur correspondant par exemple à une altitude de 4000 mètres. Si l'aiguille indicatrice 10 ne pointe pas sur la graduation 4000 de l'échelle circulaire reportée sur le rehaut 14, on déplace axialement l'axe de transmission 30 en vissant ou en dévissant la vis de réglage 34 au moyen du premier bouton 92.

Lorsque ces deux opérations décrites ci-dessus ont été effectuées, l'étalonnage du dispositif de mesure de l'altitude 1 selon l'invention est achevé. Pour s'en assurer, il suffit par exemple d'augmenter à nouveau la pression atmosphérique à l'intérieur de la cuve 84 jusqu'à une valeur correspondant au niveau de la mer, et l'on constatera que l'aiguille indicatrice 10 pointe sur la graduation 0 de l'échelle circulaire.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées. On comprendra notamment que les opérations d'étalonnage du dispositif de mesure de l'altitude 1 selon l'invention peuvent être facilement automatisées. En effet, il suffit de disposer d'une caméra capable de repérer la position du segment rectiligne de points de contact 42 par rapport à l'axe de transmission 30 et de repérer la position de l'aiguille indicatrice 10 par rapport à l'échelle circulaire 12 matérialisée sur le rehaut 14. Une telle caméra sera complétée par un dispositif d'actionnement des boutons moletés 92, 94. On comprendra également que de telles opérations d'étalonnage sont réalisées en usine et que le dispositif de mesure de l'altitude selon l'invention est livré à son utilisateur parfaitement réglé. Si, au cours d'un déplacement, l'utilisateur constate que l'altitude indiquée par son dispositif de mesure de l'altitude ne correspond pas à l'altitude du lieu où il se trouve, il lui suffira de tourner le rehaut pour amener l'indication correspondant à l'altitude à laquelle il se trouve en face de l'aiguille indicatrice 10. On note également que les opérations d'étalonnage sont effectuées à température ambiante, typiquement à 23°C. Une fois le dispositif de mesure de l'altitude 1 convenablement étalonné, il est possible de brider les filetages du support 68 et du couvercle 78 ainsi que la vis de réglage 34 par exemple à l'aide de cire ou par collage afin d'éviter que le dispositif de mesure de l'altitude 1 ne se dérègle.

### Nomenclature

Dispositif de mesure de l'altitude 1
Capteur de pression atmosphérique 2
Tôles supérieure 4a et inférieure 4b
Système de transmission 6
Système d'actionnement 8
Aiguille indicatrice 10
Echelle circulaire 12
Rehaut 14
Boîte 16
Montre-bracelet 18
Lunette rotative 20
Palpeur 22
Bras 24
Roulette 26
Rondelle 28
Axe de transmission 30
Pierres 32
Vis de réglage 34
Lame élastique 36
Goupille de transmission 38
Râteau 40
Segment rectiligne de points de contact 42
Axe de pivotement vertical 44
Secteur denté 46
Pignon 48
Tube 50
Ressort hélicoïdal 52
Piton 54
Ressort en spires 56
Courbe à l'intérieur 58
Courbe à l'extérieur 60
Piton 62
Roulement à billes 64
Cadran 65
Siège 66
Support 68
Bride de rattrapage de jeu 70
Premier filetage 72
Second filetage 74
Posage 76
Couvercle 78
Boîtier 80
Dispositif étanche 82
Cuve 84
Glace 86
Joint d'étanchéité 88
Prise d'air 90
Premier bouton 92
Second bouton 94
Lame de tournevis 96
Pierres 98a, 98b
Joints d'étanchéité 100a, 100b
Tige 102
Pignon 104
Roue dentée 106
Goupilles 108
Trous 110
Trous 112
Goupilles 114
Lame de maintien 116
Vis 118
Trou 120
Portée plane 122
Paroi plane rectiligne 124
Crochets 126
Verrous 128
Bâti 130

## Revendications

1. Dispositif de mesure de l'altitude (1) comprenant un capteur de pression atmosphérique (2) agencé pour se comprimer ou se détendre selon une direction rectiligne en fonction de la pression atmosphérique à mesurer qui augmente ou qui diminue, les mouvements de déformation du capteur de pression atmosphérique (2) étant transformés, via un système de transmission (6), en un mouvement de pivotement dans un plan perpendiculaire à la direction rectiligne de déformation du capteur de pression atmosphérique (2) d'un système d'actionnement (8) qui entraîne une aiguille indicatrice (10) en pivotement, cette aiguille indicatrice (10) se déplaçant en regard d'une échelle circulaire graduée (12), le capteur de pression atmosphérique (2) étant agencé pour pouvoir être déplacé dans un sens ou dans son sens contraire selon sa direction rectiligne de déformation relativement aux autres composants du dispositif de mesure de l'altitude, **caractérisé en ce que** le capteur de pression atmosphérique (2) est monté sur un siège (66) fixé dans un support (68) qui, avec un couvercle (78), forme un boîtier (80), le support (68) étant agencé pour pouvoir être déplacé selon la direction rectiligne de déformation du capteur de pression atmosphérique (2) relativement aux autres composants du dispositif de mesure de l'altitude, le support (68) étant doté sur sa périphérie extérieure d'un premier filetage (72) qui coopère avec un second filetage (74) prévu sur la périphérie intérieure du couvercle (78).

2. Dispositif de mesure de l'altitude selon la revendication 1, **caractérisé en ce que** le capteur de pression atmosphérique (2) est du type anéroïde et **en ce qu'**il est formé de deux tôles supérieure (4a) et inférieure (4b) assemblées entre elles sous vide partiel.

3. Dispositif de mesure de l'altitude selon la revendication 2, **caractérisé en ce que** le système de transmission (6) comprend un palpeur (22) formé d'un bras (24) par une extrémité libre duquel le palpeur (22) est en appui sur la tôle supérieure (4a) du capteur de pression atmosphérique (2).

4. Dispositif de mesure de l'altitude selon la revendication 3, **caractérisé en ce que** le bras (24) du palpeur (22) est muni à son extrémité libre d'une roulette (26) par laquelle le palpeur (22) est en contact avec la tôle supérieure (4a) du capteur de pression atmosphérique (2).

5. Dispositif de mesure de l'altitude selon la revendication 4, **caractérisé en ce qu'**une rondelle (28) sur laquelle la roulette (26) est en appui est fixée sur la tôle supérieure (4a) du capteur de pression atmosphérique (2).

6. Dispositif de mesure de l'altitude selon l'une quelconque des revendications 3 à 5, **caractérisé en ce qu'**à une autre extrémité le palpeur (22) est fixé rigidement sur un axe de transmission (30) qui s'étend selon une direction perpendiculaire à la direction rectiligne de déformation du capteur de pression atmosphérique (2).

7. Dispositif de mesure de l'altitude selon la revendication 6, **caractérisé en ce que** l'axe de transmission (30) est agencé pour pivoter sous l'effet des mouvements de déformation du capteur de pression atmosphérique (2) qui lui sont transmis par le palpeur (22) et **en ce que** l'axe de transmission (30) est monté mobile selon son axe de symétrie longitudinale.

8. Dispositif de mesure de l'altitude selon l'une quelconque des revendications 6 ou 7, **caractérisé en ce qu'**une goupille de transmission (38) fixée rigidement sur l'axe de transmission (30) communique au système d'actionnement (8) les mouvements de déformation du capteur de pression atmosphérique (2).

9. Dispositif de mesure de l'altitude selon la revendication 8, **caractérisé en ce que** le système d'actionnement (8) comprend un râteau (40) contre lequel la goupille de transmission (38) est en appui selon un segment rectiligne (42) de points de contact.

10. Dispositif de mesure de l'altitude selon la revendication 9, **caractérisé en ce que** le râteau (40) est monté pivotant dans un plan perpendiculaire à la direction de déformation du capteur de pression (2) et est pourvu d'un secteur denté (46) en arc de cercle qui engrène avec un pignon (48) solidaire d'un tube (50) sur lequel est montée l'aiguille indicatrice (10).

11. Dispositif de mesure de l'altitude selon la revendication 10, **caractérisé en ce que** le dispositif de mesure de l'altitude (1) comprend des moyens élastiques agencés pour maintenir le palpeur (22) en contact permanent avec le capteur de pression atmosphérique (2).

12. Dispositif de mesure de l'altitude selon la revendication 11, **caractérisé en ce que** les moyens élastiques comprennent un ressort hélicoïdal (52) qui exerce une force élastique de rappel sur le râteau (40).

13. Dispositif de mesure de l'altitude selon la revendication 11, **caractérisé en ce que** les moyens élastiques comprennent un ressort en spires (56) dont une courbe à l'intérieur (58) est fixée sur le tube (50) sur lequel est montée l'aiguille indicatrice (10).

14. Dispositif de mesure de l'altitude selon la revendication 13, **caractérisé en ce qu'**un roulement à billes (64) est disposé entre le ressort en spires (56) et le tube (50) sur lequel est montée l'aiguille indicatrice (10).

15. Dispositif de mesure selon l'une quelconque des revendications 1 à 14, **caractérisé en ce que** le support (68) et le capteur de pression atmosphérique (2) sont concentriques.

16. Dispositif de mesure selon l'une quelconque des revendications 1 à 15, **caractérisé en ce que** le capteur de pression atmosphérique (2) est fixé sur le siège (66) avec interposition d'une bride (70) de rattrapage de jeu entre le capteur de pression atmosphérique (2) et le support (68).

17. Objet portable comprenant un dispositif de mesure de l'altitude selon l'une quelconque des revendications précédentes.

18. Objet portable selon la revendication 17, **caractérisé en ce qu'**il s'agit d'une montre-bracelet (18).

## Patentansprüche

1. Höhenmessvorrichtung (1), umfassend einen Atmosphärendrucksensor (2), der dafür ausgelegt ist, in Abhängigkeit vom zu messenden Atmosphärendruck, der zunimmt oder abnimmt, in einer geraden Richtung zusammengedrückt oder entlastet zu werden, wobei die Verformungsbewegungen des Atmosphärendrucksensors (2) über ein Übertragungssystem (6) in eine Drehbewegung eines Betätigungssystems (8) in einer Ebene senkrecht zu der geraden Verformungsrichtung des Atmosphärendrucksensors (2) transformiert werden, wodurch ein Zeiger (10) rotatorisch angetrieben wird, wobei sich dieser Zeiger (10) gegenüber einer gestuften kreisförmigen Skala (12) verlagert, wobei der Atmosphärendrucksensor (2) dafür ausgelegt ist, in einem Richtungssinn oder in dem entgegengesetzten Richtungssinn längs seiner geraden Verformungsrichtung relativ zu den anderen Komponenten der Höhenmessvorrichtung verlagert werden zu können, **dadurch gekennzeichnet, dass** der Atmosphärendrucksensor (2) auf einem Sitz (66) montiert ist, der in einem Träger (68) befestigt ist, der zusammen mit einem Deckel (78) ein Gehäuse (80) bildet, wobei der Träger (68) dafür ausgelegt ist, in der geraden Verformungsrichtung des Atmosphärendrucksensors (2) relativ zu den anderen Komponenten der Höhenmessvorrichtung verlagert werden zu können, wobei der Träger (68) an seinem Außenumfang mit einem ersten Gewinde (72) versehen ist, das mit einem zweiten Gewinde (74) zusammenwirkt, das am inneren Umfang des Deckels (78) vorgesehen ist.

2. Höhenmessvorrichtung nach Anspruch 1, **dadurch gekennzeichnet, dass** der Atmosphärendrucksensor (2) vom Aneroid-Typ ist und dass er aus zwei Blechen, einem oberen Blech (4a) und einem unteren Blech (4b) gebildet ist, die in einem Teilvakuum zusammengefügt sind.

3. Höhenmessvorrichtung nach Anspruch 2, **dadurch gekennzeichnet, dass** das Übertragungssystem (6) einen Taster (22) umfasst, der durch einen Arm (24) gebildet ist, über dessen freies Ende sich der Taster (22) an dem oberen Blech (4a) des Atmosphärendrucksensors (2) abstützt.

4. Höhenmessvorrichtung nach Anspruch 3, **dadurch gekennzeichnet, dass** der Arm (24) des Tasters (22) an seinem freien Ende mit einer Rolle (26) versehen ist, über die der Taster (22) mit dem oberen Blech (4a) des Atmosphärendrucksensors (2) in Kontakt ist.

5. Höhenmessvorrichtung nach Anspruch 4, **dadurch gekennzeichnet, dass** auf dem oberen Blech (4a) des Atmosphärendrucksensors (2) eine Scheibe (28) befestigt ist, auf der sich die Rolle (26) abstützt.

6. Höhenmessvorrichtung nach einem der Ansprüche 3 bis 5, **dadurch gekennzeichnet, dass** der Taster (22) an einem anderen Ende an einer Übertragungsachse (30) starr befestigt ist, die sich in einer Richtung senkrecht zu der geraden Verformungsrichtung des Atmosphärendrucksensors (2) erstreckt.

7. Höhenmessvorrichtung nach Anspruch 6, **dadurch gekennzeichnet, dass** die Übertragungsachse (30) dafür ausgelegt ist, sich unter der Wirkung von Verformungsbewegungen des Atmosphärendrucksensors (2) zu drehen, die an sie über den Taster (22) übertragen werden, und dass die Übertragungsachse (30) längs ihrer longitudinalen Symmetrieachse bewegbar montiert ist.

8. Höhenmessvorrichtung nach einem der Ansprüche 6 oder 7, **dadurch gekennzeichnet, dass** ein Übertragungsstift (38), der an der Übertragungsachse (30) starr befestigt ist, die Verformungsbewegungen des Atmosphärendrucksensors (2) auf das Betätigungssystem (8) überträgt.

9. Höhenmessvorrichtung nach Anspruch 8, **dadurch gekennzeichnet, dass** das Betätigungssystem (8) einen Rechen (40) umfasst, gegen den sich der Übertragungsstift (38) entlang eines geradlinigen Kontaktpunktsegments (42) abstützt.

10. Höhenmessvorrichtung nach Anspruch 9, **dadurch gekennzeichnet, dass** der Rechen (40) in einer Ebene senkrecht zu der Verformungsrichtung des Drucksensors (2) drehbar montiert ist und mit einem kreisbogenförmigen gezahnten Sektor (46) versehen ist, der mit einem Ritzel (48) kämmt, das mit einem Rohr (50) fest verbunden ist, an dem der Zeiger (10) montiert ist.

11. Höhenmessvorrichtung nach Anspruch 10, **dadurch gekennzeichnet, dass** die Höhenmessvorrichtung (1) elastische Mittel umfasst, die dafür ausgelegt sind, den Taster (22) in ständigem Kontakt mit dem Atmosphärendrucksensor (2) zu halten.

12. Höhenmessvorrichtung nach Anspruch 11, **dadurch gekennzeichnet, dass** die elastischen Mittel eine Schraubenfeder (52) umfassen, die auf den Rechen (40) eine elastische Rückstellkraft ausübt.

13. Höhenmessvorrichtung nach Anspruch 11, **dadurch gekennzeichnet, dass** die elastischen Mittel eine Spiralfeder (56) umfassen, deren innere Windung (58) an dem Rohr (50), an dem der Zeiger (10) montiert ist, befestigt ist.

14. Höhenmessvorrichtung nach Anspruch 13, **dadurch gekennzeichnet, dass** zwischen der Spiralfeder (56) und dem Rohr (50), an dem der Zeiger (10) montiert ist, ein Kugellager (64) angeordnet ist.

15. Messvorrichtung nach einem der Ansprüche 1 bis 14, **dadurch gekennzeichnet, dass** der Träger (68) und der Atmosphärendrucksensor (2) konzentrisch sind.

16. Messvorrichtung nach einem der Ansprüche 1 bis 15, **dadurch gekennzeichnet, dass** der Atmosphärendrucksensor (2) an dem Sitz (66) unter Einfügung eines Spiel-ausgleichenden Flansches (70) zwischen dem Atmosphärendrucksensor (2) und dem Träger (68) befestigt ist.

17. Tragbarer Gegenstand, umfassend eine Höhenmessvorrichtung nach einem der vorhergehenden Ansprüche.

18. Tragbarer Gegenstand nach Anspruch 17, **dadurch gekennzeichnet, dass** es sich um eine Armbanduhr (18) handelt.

## Claims

1. Altitude measurement device (1) including an atmospheric pressure sensor (2) arranged to be compressed or to expand in a rectilinear direction as a function of the atmospheric pressure to be measured which increases or decreases, the movements of deformation of the atmospheric pressure sensor (2) being transformed, via a transmission system (6), into a pivoting motion, in a plane perpendicular to the rectilinear direction of deformation of the atmospheric pressure sensor (2), of an activation system (8) which drives the pivoting of an indicator hand (10), said indicator hand (10) moving over a graduated circular scale (12), the atmospheric pressure sensor (2) being arranged to be able to be moved in one direction or in the opposite direction along the rectilinear direction of deformation thereof relative to the other components of the altitude measurement device, **characterized in that** the atmospheric pressure sensor (2) is mounted on a seat (66) which is fixed in a support (68), which, with a cover (78), forms a case (80), the support (68) being arranged to be moved along the rectilinear direction of deformation of the atmospheric pressure sensor (2) relatively to the other components of the altitude measurement device, the support (68) being provided on the outer periphery thereof with a first thread (72) which cooperates with a second thread (74) provided on the inner periphery of the cover (76).

2. Altitude measurement device according to claim 1, **characterized in that** the atmospheric pressure sensor (2) is of the aneroid type and is formed of two upper (4a) and lower (4b) plates assembled to each other under partial vacuum.

3. Altitude measurement device according to claim 2, **characterized in that** the transmission system (6) comprises a sensing element (22) formed of an arm (24) via a free end of which the sensing element (22) bears on the upper plate (4a) of the atmospheric pressure sensor (2).

4. Altitude measurement device according to claim 3, **characterized in that** the arm (24) of the sensing element (22) is provided at the free end thereof with a caster (26) via which the sensing element (22) is in contact with the upper plate (4a) of the atmospheric pressure sensor (2).

5. Altitude measurement device according to claim 4, **characterized in that** a washer (28), on which the caster (26) bears, is fixed on the upper plate (4a) of the atmospheric pressure sensor (2).

6. Altitude measurement device according to any of claims 3 to 5, **characterized in that** at another end, the sensing element (22) is rigidly fixed on a transmission shaft (30) which extends in a direction perpendicular to the rectilinear direction of transformation of the atmospheric pressure sensor (2).

7. Altitude measurement device according to claim 6, **characterized in that** the transmission shaft (30) is arranged to rotate under the effect of the movements of deformation of the atmospheric pressure sensor (2) which are transmitted thereto by the sensing element (22) and **in that** the transmission shaft (30) is mounted to move along the longitudinal axis of symmetry thereof.

8. Altitude measurement device according to any of claims 6 or 7, **characterized in that** a transmission pin (38), rigidly fixed on the transmission shaft (30), communicates to the activation system (8) the movements of transformation of the atmospheric pressure sensor (2).

9. Altitude measurement device according to claim 8, **characterized in that** the activation system (8) includes a rack (40) against which the transmission pin (38) bears along a rectilinear segment (42) of contact points.

10. Altitude measurement device according to claim 9, **characterized in that** the rack (40) is mounted to pivot in a plane perpendicular to the direction of deformation of the pressure sensor (2) and is provided with a toothed sector (46) in the arc of a circle which meshes with a pinion (48) integral with a tube (50) on which is mounted the indicator hand (10).

11. Altitude measurement device according to claim 10, **characterized in that** the altitude measurement device (1) includes elastic means arranged to maintain the sensing element (22) in permanent contact with the atmospheric pressure sensor (2).

12. Altitude measurement device according to claim 11, **characterized in that** the elastic means comprise a coiled spring (52) which exerts an elastic return force on the rack (40).

13. Altitude measurement device according to claim 11, **characterized in that** the elastic means comprise a spiral spring (56) having an inner curve (58) that is fastened to the tube (50) on which is mounted the indicator hand (10).

14. Altitude measurement device according to claim 13, **characterized in that** a ball bearing (64) is disposed between the spiral spring (56) and the tube (50) on which is mounted the indicator hand (10).

15. Altitude measurement device according to any of claims 1 to 14, **characterized in that** the support (68) and the atmospheric pressure sensor (2) are concentric.

16. Altitude measurement device according to any of claims 1 to 15, **characterized in that** the atmospheric pressure sensor (2) is mounted on the seat (68) with the insertion of a flange (70) to take up play between atmospheric pressure sensor (2) and support (68).

17. Portable object comprising an altitude measurement device according to any of the preceding claims.

18. Portable object according to claim 17, **characterized in that** the object is a wristwatch (18).
